# EUROPÄISCHE PATENTSCHRIFT

(11) **EP 0 887 357 B1**
(45) Veröffentlichungstag und Bekanntmachung des Hinweises auf die Patenterteilung: **02.04.2003**
(21) Anmeldenummer: 98110003.5
(22) Anmeldetag: 02.06.1998
(51) Int. Cl.: C08F 10/00, C08L 23/12

(54) **Propylenpolymerisate**
Propylene polymers
Polymères de propylène

(30) Priorität: 24.06.1997 DE 19726796
(43) Veröffentlichungstag der Anmeldung: 30.12.1998
(73) Patentinhaber: Basell Poliolefine Italia S.p.A., 20124 Milano (IT); Novolen Technology Holdings C.V., 2596 JJ Den Haag (NL)
(72) Erfinder: Hüffer, Stephan, Dr., 67071 Ludwigshafen (DE); Rösch, Joachim, Dr., 67063 Ludwigshafen (DE); Langhauser, Franz, Dr., 67152 Ruppertsberg (DE); Lilge, Dieter, Dr., 67117 Limburgerhof (DE); Hingmann, Roland, Dr., 68526 Ladenburg (DE)
(74) Vertreter: Colucci, Giuseppe

(56) Entgegenhaltungen:
- EP-A- 0 546 191
- EP-A- 0 597 461
- GB-A- 2 101 610
- PATENT ABSTRACTS OF JAPAN vol. 097, no. 005, 30. Mai 1997 & JP 09 025351 A (SEKISUI CHEM CO LTD), 28. Januar 1997

## Beschreibung

Die vorliegende Erfindung betrifft Propylenpolymerisate, enthaltend eine Matrix eines Propylenhomopolymerisats und ein Copolymerisat aus Propylen und anderen Alkenen, dadurch gekennzeichnet, daß bei der Auftrennung der Propylenpolymerisate nach Taktizität und Comonomerverteilung der Polymerketten, dadurch daß man die Propylenpolymerisate zunächst in siedendem Xylol löst, anschlieβend die Lösung mit einer Kühlrate von 10°C/h auf 25°C abkühlt und dann bei steigender Temperatur die Propylenpolymerisate in Fraktionen unterschiedlicher Löslichkeit auftrennt, von der Matrix, die bei Erwärmen der abgekühlten Propylenpolymerisatlösung auf eine Temperatur von 80°C ungelöst verbleibt, entweder eine oder mehrere der Bedingungen, daß
i) mehr als 20 Gew.-% der Matrix bei weiterem Erwärmen auf eine Temperatur von 112°C ungelöst bleiben oder
ii) mehr als 8 Gew.-% der Matrix bei weiterem Erwärmen auf eine Temperatur von 117°C ungelöst bleiben oder
iii) mehr als 1 Gew.-% der Matrix bei weiterem Erwärmen auf eine Temperatur von 122°C ungelöst bleiben,
erfüllt werden.

Außerdem betrifft die Erfindung ein Verfahren zur Herstellung der Propylenpolymerisate, deren Verwendung zur Herstellung von Folien, Fasern oder Formkörpern sowie die Folien, Fasern oder Formkörper aus diesen Propylenpolymerisaten.

In EP-A-0 864 591 werden Propylenhomopolymerisate beschrieben, die eine besonders hohe Kristallinität aufweisen und mit einem Katalysatorsystem, enthaltend eine titanhaltige Feststoffkomponente, eine Aluminiumverbindung und eine Elektronendonorverbindung, hergestellt wurden.

Durch Polymerisation an Ziegler-Natta-Katalysatoren erhältliche Propylen-Ethylen-Copolymerisate sind bereits in zahlreichen Patentschriften beschrieben worden. Aus der US-A 4 260 710 ist bekannt, Homo- und Copolymerisate von Alk-1-enen durch Polymerisation mit Hilfe von Ziegler-Natta-Katalysatoren in einem Rührkessel herzustellen. Die dabei verwendeten Katalysatorkomponenten enthalten u.a. Verbindungen des mehrwertigen Titans, Aluminiumhalogenide und/oder -alkyle, sowie Elektronendonorverbindungen, wobei meistens Silane, Ester, Ether, Ketone oder Lactone verwendet werden (EP-B 14 523, EP-B 45 977, EP-B 86 473, US-A 857 613, EP-A 171 200).

Des weiteren sind eine Reihe von Verfahren zur Darstellung von Propylen-Ethylen-Blockcopolymeren mit Hilfe eines Ziegler-Natta-Katalysatorsystems bekannt (US-A 4 454 299, US-A 4 455 405, ZA-B 0084/3561, ZA-B 0084/3563, ZA-B 0084/5261, GB-B 1 032 945, DE-A 38 27 565), bei denen man zunächst gasförmiges Propylen in einer ersten Reaktionszone polymerisiert und das daraus erhältliche Homopolymerisat anschließend in eine zweite Reaktionszone bringt, wo ein Gemisch aus Ethylen und Propylen hinzupolymerisiert wird. Das Verfahren wird gewöhnlich bei erhöhtem Druck und in Anwesenheit von Wasserstoff als Molmassenregler durchgeführt. Die dabei erhältlichen Copolymerisate weisen meist eine gute Schlagzähigkeit und Steifigkeit auf.

Durch Variation der Anteile des in der ersten Stufe erhaltenen Homopolymerisats und des in der zweiten Stufe hinzupolymerisierten Copolymerisats ist es möglich die Schlagzähigkeit der Propylen-Ethylen-Blockcopolymeren zu steuern. Hierbei ist jedoch zwangsläufig mit einer Zunahme der Schlagzähigkeit eine Abnahme der Steifigkeit und umgekehrt mit einer Zunahme der Steifigkeit eine Abnahme der Schlagzähigkeit verbunden. Für einige Anwendungsgebiete von Kunststoffen ist es aber notwendig, die Steifigkeit zu erhöhen, ohne die Schlagzähigkeit abzusenken bzw. die Schlagzähigkeit zu verbessern, ohne die Steifigkeit zu verringern. Darüber hinaus sollten die Polymerisate einen möglichst geringen Chlorgehalt aufweisen, und man ist aus wirtschaftlichen Gründen an einer weiteren Steigerung der Produktivität des eingesetzten Katalysatorsystems interessiert.

Der vorliegenden Erfindung lag die Aufgabe zugrunde, Propylenpolymerisate zu entwickeln, welche ein nochmals verbessertes Verhältnis von Steifigkeit und Zähigkeit aufweisen, einen geringen Chlorgehalt haben und darüber hinaus nach einem Verfahren mit einer gesteigerten Produktivität hergestellt werden können.

Demgemäß wurden die eingangs definierten Propylenpolymerisate gefunden sowie ein Verfahren zu deren Herstellung, deren Verwendung zur Herstellung von Folien, Fasern oder Formkörpern sowie die Folien, Fasern oder Formkörper aus diesen Propylenpolymerisaten.

Die erfindungsgemäßen Propylenpolymerisate liegen in der Regel mindestens zweiphasig vor. Sie enthalten eine durchgehende Phase eines Propylenhomopolymerisats, die als Matrix bezeichnet wird. Diese Matrix-Phase ist teilkristallin, d.h. sie besteht aus einem kristallisierten Anteil, den sogenannten Kristalliten, und einem amorphen Anteil. Erfindungsgemäß sollen unter der Bezeichnung Propylenhomopolymerisat auch solche Propylenpolymerisate verstanden werden, in die untergeordnete Mengen an anderen Alkenen einpolymerisiert sind, wobei die Propylenhomopolymerisate in der Regel weniger als 2 Gew.-% und insbesondere weniger als 1 Gew.-% andere Alkene enthalten. Bevorzugt enthält die Matrix der erfindungsgemäßen Propylenpolymerisate als Monomer nur Propylen.

Die erfindungsgemäßen Propylenpolymerisate enthalten vorzugsweise von 50 bis 92 Gew.-% des die Matrix bildenden Propylenhomopolymerisats. Besonders bevorzugt beträgt der Anteil der Matrix von 60 bis 90 Gew.-%.

Weiterhin enthalten die erfindungsgemäßen Propylenpolymerisate ein Copolymerisat aus Propylen und anderen Alkenen, das phasensepariert von der Matrix vorliegt und keine oder eine sehr geringe Kristallinität besitzt. Dieses als Kautschuk oder Elastomer bezeichnete Copolymerisat enthält in der Regel von 20 bis 85 Gew.-% Propylen. Bevorzugt liegt der Propylengehalt des Copolymerisats im Bereich von 35 bis 80 Gew-% und insbesondere von 45 bis 70 Gew.-%. Die Phase des Copolymerisats aus Propylen und anderen Alkenen liegt je nach gewähltem Verhältnis von Matrix zu Elastomer dispers in der Matrix vor oder ist ebenfalls durchgehend und somit cokontinuierlich mit der Matrix.

Unter den anderen Alkenen, die mit Propylen copolymerisiert sind, sind bevorzugt Alk-1-ene mit bis zu 10 C-Atomen zu verstehen. Dabei kommen insbesondere Ethylen, But-1-en, Pent-1-en, Hex-1-en, Hept-1-en oder Oct-1-en oder Gemische aus diesen Comonomeren in Betracht, wobei Ethylen oder But-1-en bevorzugt sind. Im Falle der als Elastomere wirkenden Copolymerisate können als andere Alkene auch nichtkonjugierte Diene wie Ethylidennorbornen, Dicyclopentadien oder 1,4-Hexadien enthalten sein, die dann in der Regel mit Ethylen und Propylen copolymerisiert sind.

Vorzugsweise enthalten die erfindungsgemäßen Propylenpolymerisate von 8 bis 50 Gew.-% des Copolymerisats aus Propylen und anderen Alkenen. Besonders bevorzugt beträgt der Anteil der Elastomerphase von 10 bis 40 Gew.-%.

Neben den wesentlichen Komponenten können die erfindungsgemäßen Propylenpolymerisate noch weitere Homo- oder Copolymerisaten von Alkenen, beispielsweise Homo- oder Copolymerisate des Ethylens oder Polyisobutylen, enthalten. Beispielsweise kann der Anteil der weiteren Homo- oder Copolymerisate von Alkenen 0 bis 30 Gew.-%, bezogen auf das gesamte Propylenpolymerisat, betragen.

Eine Methode, Propylenpolymerisate bezüglich der Anteile von Polymerketten unterschiedlicher Taktizität und unterschiedlichen Comonomereinbaus analytisch zu erfassen, ist die TREF (Temperature Rising Elution Fractionation), bei der die Lösungstemperatur des Polymeranteils dessen mittlerer Länge fehlerfrei aufgebauter Sequenzen entspricht. Zur Durchführung der TREF werden die Propylenpolymerisate zunächst in heißem, bevorzugt siedendem Xylol gelöst, anschließend die Lösung mit einer konstanten Kühlrate abkühlt und dann bei steigender Temperatur die Propylenpolymerisate in Fraktionen unterschiedlicher Kristallinität aufgetrennt. Beschrieben werden kann die Zusammensetzung der Propylenpolymerisate durch den Anteil, der beim Erwärmen der abgekühlten Propylenpolymerisatlösung auf eine definierte Temperatur ungelöst bleibt.

Bei der Fraktionierung von Mischungen aus Propylenhomopolymerisaten und Copolymerisaten des Propylens mit anderen Alkenen werden bei steigender Lösungstemperatur zunächst die aus verschiedenen Monomeren aufgebauten Polymerketten in Lösung gehen, wobei die Lösungstemperatur umso niedriger ist, je kürzer die mittleren Sequenzlängen einer Monomersorte sind. Das bedeutet, zunächst geht der Elastomeranteil in Lösung und anschließend bei höheren Temperaturen die Matrix, die nochmals bezüglich der mittleren isotaktischen Sequenzlänge der Polymerketten aufgetrennt werden kann. Hierbei hat es sich herausgestellt, daß die Polymerisatanteile, die bis einschließlich einer Temperatur von 80°C in Lösung gehen, der Elastomerphase zugeordnet werden können, während der Anteil, der bei 80°C ungelöst verbleibt und erst bei höheren Temperaturen in Lösung geht, aus der Matrix stammt.

Die erfindungsgemäßen Propylenpolymerisate zeichnen sich durch einen hohen Anteil an Polymerketten mit langen, fehlerfrei isotaktischen Propylensequenzen in der Matrix aus. Bezüglich der Matrix, d.h. des Anteils der Propylenpolymerisate der bei Erwärmen der abgekühlten Polymerisatlösung auf eine Temperatur von 80°C ungelöst bleibt, erfüllen die Propylenpolymerisate entweder eine oder bevorzugt zwei oder alle der folgenden Bedingungen i) bis iii) :
i) Mehr als 20 Gew.-%, bevorzugt mehr als 30 Gew.-% und insbesondere mehr als 40 Gew.-% der Matrix bleiben bei weiterem Erwärmen auf eine Temperatur von 112°C ungelöst.
ii) Mehr als 8 Gew.-%, bevorzugt mehr als 12 Gew.-% und insbesondere mehr als 16 Gew.-% der Matrix bleiben bei weiterem Erwärmen auf eine Temperatur von 117°C ungelöst.
iii) Mehr als 1 Gew.-%, bevorzugt mehr als 2 Gew.-% und insbesondere mehr als 3 Gew.-% der Matrix bleiben bei weiterem Erwärmen auf eine Temperatur von 122°C ungelöst.

Um erfindungsgemäß die Zusammensetzung der Propylenpolymerisate zu bestimmen, wird die TREF in folgender Weise durchgeführt:
1 - 10 g des Propylenpolymerisats werden in soviel siedenden Xylol gelöst, daß eine 0,5- bis 2-gew.-%ige Lösung entsteht. Die siedende Lösung wird dann mit einer linearen Kühlrate im Bereich von 2°C/h bis 15°C/h, bevorzugt mit 10°C/h, auf 25°C oder eine niedrigere Temperatur abgekühlt, wobei der Großteil des Polymerisats ausfällt. Die Kristallsuspension wird nun in eine temperierbare Extraktionsapparatur überführt, die der von W. Holtup in Makromol. Chem. 178, 2335 (1977) beschrieben entspricht, und auf die erste Elutionstemperatur erwärmt. Anschließend werden die Polypropylenkristalle bei dieser Temperatur unter heftiger Durchmischung mindestens 10 Minuten extrahiert. Danach wird die Polymerlösung abgelassen, während die Polymerisatkristalle im Extraktor zurückbleiben. Das gelöste Polymerisat wird in kaltem Aceton (Temperatur < 0°C) ausgefällt, abfiltriert und im Vakuum bis zur Gewichtskonstanz getrocknet.

Der Extraktor wird nun auf die nächste Elutionstemperatur erwärmt und es wird soviel an Xylol der selben Temperatur hinzugegeben, wie auch zum Lösen eingesetzt wurde. Anschließend wird wiederum mindestens 10 Minuten unter heftiger Durchmischung extrahiert, die Polymerlösung abgelassen, das gelöste Polymerisat in kaltem Aceton ausgefällt, abfiltriert und getrocknet. Diese Schritte werden so lange wiederholt, bis sich das gesamte Polymerisat gelöst hat.

Der Elastomeranteil entspricht den bis einschließlich 80°C gelösten Anteilen, der Matrixanteil ist die Summe aller Fraktionen, die sich bei höheren Elutionstemperaturen lösen. Der bei den einzelnen Temperaturen unlösliche Matrixanteil ergibt sich aus dem Verhältnis der TREF-Fraktion bei der entsprechenden Temperatur zum gesamten Matrixanteil.

Da die Matrix nur einen Teil der erfindungsgemäßen Propylenpolymerisate ausmacht, liegen die Anteile, die beim Erwärmen auf 112°C, 117°C bzw. 122°C ungelöst bleiben, bezogen auf das gesamte Propylenpolymerisat natürlich niedriger und sind vom Verhältnis Matrixanteil zu Elastomeranteil abhängig.

Die Herstellung der erfindungsgemäßen Propylenpolymerisate kann durch Schmelzemischen der vorher separat polymerisierten Anteile erfolgen. Die Vermischung erfolgt dann in an sich bekannter Weise beispielsweise mittels eines Extruders. Die auf solche Weise hergestellten Polymermischungen können auch Polymerisate enthalten, die mit anderen, als zur Herstellung der Matrix geeigneten Katalysatorsystemen erhältlich sind, beispielsweise Polyisobutylene oder Ethylen-Propylen-Dien-(EPDM)-Kautschuke.

Bevorzugt werden die erfindungsgemäßen Propylenpolymerisate jedoch in einem mehrstufigen Polymerisationsprozeß hergestellt, wobei in der Regel in einer ersten Stufe die Matrix polymerisiert wird, der anschließend in einer zweiten Stufe ein Copolymerisat des Propylens mit anderen Alkenen hinzupolymerisiert wird. Darüberhinaus ist es möglich, in anschließenden Stufen weitere Homooder Copolymerisate von Alkenen hinzuzupolymerisieren. Für solche Verfahren eignen sich als Alkene vor allem Alk-1-enen mit bis zu 10 C-Atomen.

Bei dem ebenfalls erfindungsgemäßen Verfahren erfolgt die Herstellung der Propylenpolymerisate durch Polymerisation von Propylen bei Temperaturen von 50 bis 120°C und Drücken von 15 bis 40 bar in einer ersten Polymerisationsstufe und anschließende Copolymerisation von Propylen und anderen Alk-1-enen mit bis zu 10 C-Atomen bei Temperaturen von 30 bis 100°C und Drücken von 5 bis 40 bar in einer zweiten Polymerisationsstufe in Gegenwart eines Ziegler-Natta-Katalysatorsystems, das als aktive Bestandteile eine titanhaltige Feststoffkomponente a), die durch Umsetzung eines Titanhalogenids mit einer chlorfreien Verbindung des Magnesiums, einem anorganischen Oxid als Träger, einem C₁-C₈-Alkanol und einer Elektronendonorverbindung erhalten wird, sowie als Cokatalysatoren eine Aluminiumverbindung b) und eine weitere Elektronendonorverbindung c) enthält.

Zur Herstellung der titanhaltigen Feststoffkomponente a) werden als Titanhalogenide die Halogenide des drei- oder vierwertigen Titans, beispielsweise TiBr₃, TiBr₄, TiCl₃ oder TiCl₄, oder Titanalkoxyhalogenide wie Ti(OCH₃)Cl₃, Ti(OC₂H₅)Cl₃, Ti(O-iso-C₃H₇)Cl₃, Ti(O-n-C₄H₉)Cl₃, Ti(OC₂H₅)Br₃, Ti(O-n-C₄H₉)Br₃, Ti(OCH₃)₂Cl₂, Ti(OC₂H₅)₂Cl₂, Ti(O-n-C₄H₉)₂Cl₂, Ti(OC₂H₅)₂Br₂, Ti(OCH₃)₃Cl, Ti(OC₂H₅)₃Cl, Ti(O-n-C₄H₉)₃Cl oder Ti(OC₂H₅)₃Br eingesetzt, wobei die Titanhalogenide, die neben Titan nur Halogen enthalten, und hierbei vor allem die Titanchloride und insbesondere Titantetrachlorid bevorzugt sind. Erfindungsgemäß können die Titanhalogenide auch als Mischungen untereinander oder in Mischungen mit weiteren Titanverbindungen verwendet werden. Als weitere Titanverbindungen kommen beispielsweise Titanalkoholate wie Ti(OCH₃)₄, Ti(OC₂H₅)₄ oder Ti(O-n-C₄H₉)₄ in Betracht. Bevorzugt werden die Titanhalogenide allein verwendet.

Weiter werden bei der Herstellung der titanhaltigen Feststoffkomponente eine oder eine Mischung verschiedener chlorfreier Verbindungen des Magnesiums eingesetzt. Unter chlorfreien Verbindungen des Magnesiums sollen erfindungsgemäß solche verstanden werden, die in ihrer Strukturformel kein Halogen enthalten. Die als Verunreinigungen in den erfindungsgemäßen chlorfreien Verbindungen des Magnesiums enthaltenen Halogenanteile sollten jedoch 5 Gew.-% und insbesondere 2 Gew.-% nicht überschreiten. Als chlorfreien Verbindungen des Magnesiums kommen insbesondere Magnesiumalkyle und Magnesiumaryle, sowie Magnesiumalkoxy- und Magnesiumaryloxyverbindungen in Betracht, wobei bevorzugt Magnesiumdi-(C₁-C₁₀-alkyl)-Verbindungen verwendet werden. Beispiele für erfindungsgemäße chlorfreie Verbindungen des Magnesiums sind Diethylmagnesium, Di-n-propylmagnesium, Di-iso-propylmagnesium, Din-butylmagnesium, Di-sek.-butylmagnesium, Di-tert.-butylmagnesium, Diamylmagnesium, n-Butylethylmagnesium, n-Butyl-sek.-butylmagnesium, n-Butyloctylmagnesium, Diphenylmagnesium, Diethoxymagnesium, Di-n-propyloxymagnesium, Di-iso-propyloxymagnesium, Din-butyloxymagnesium, Di-sek.-butyloxymagnesium, Di-tert.-butyloxymagnesium, Diamyloxymagnesium, n-Butyloxyethoxymagnesium, n-Butyloxy-sek.-butyloxymagnesium, n-Butyloxyoctyloxymagnesium oder Diphenoxymagnesium. Von diesen sind n-Butylethylmagnesium oder n-Butyloctylmagnesium besonders bevorzugt.

Darüberhinaus enthält die titanhaltige Feststoffkomponente a) mindestens ein anorganisches Oxid als Träger. Es wird in der Regel ein feinteiliges anorganisches Oxid als Träger verwendet, welches einen mittleren Teilchendurchmesser von 5 bis 200 µm, bevorzugt von 15 bis 100 µm und insbesondere von 20 bis 70 µm aufweist. Unter dem mittleren Teilchendurchmesser ist hierbei der volumenbezogene Mittelwert (Medianwert) der durch Coulter-Counter-Analyse nach ASTM Standard D 4438 bestimmten Korngrößenverteilung zu verstehen.

Vorzugsweise sind die Teilchen des feinteiligen anorganischen Oxids aus Primärpartikeln zusammengesetzt, die einen mittleren Teilchendurchmesser der Primärpartikel von 1 bis 20 µm, insbesondere von 3 bis 10 µm aufweisen. Bei den sogenannten Primärpartikein handelt es sich um poröse, granuläre Oxidpartikel, welche im allgemeinen durch Mahlung aus einem Hydrogel des anorganischen Oxids erhalten werden. Es ist auch möglich die Primärpartikeln vor ihrer Weiterverarbeitung zu sieben.

Weiterhin ist das bevorzugt zu verwendende anorganische Oxid auch dadurch charakterisiert, daß es Hohlräume bzw. Kanäle mit einem mittleren Durchmesser von 0,1 bis 20 µm, insbesondere von 1 bis 15 µm, aufweist, deren makroskopischer Volumenanteil am Gesamtpartikel im Bereich von 5 bis 30 %, insbesondere im Bereich von 10 bis 30 %, liegt.

Die Bestimmung der mittleren Teilchendurchmesser der Primärpartikel sowie des makroskopischen Volumenanteils der Hohlräume und Kanäle des anorganischen Oxids erfolgt zweckmäßigerweise durch Bildanalyse mit Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des anorganischen Oxids. Die erhaltenen elektronenmikroskopischen Aufnahmen werden ausgewertet und daraus die mittleren Teilchendurchmesser der Primärpartikel sowie der makroskopische Volumenanteil der Hohlräume und Kanäle bestimmt. Die Bildanalyse erfolgt vorzugsweise durch Überführung des elektronenmikroskopischen Datenmaterials in ein Grauwert-Binärbild und die digitale Auswertung mittels einer geeigneten EDV-Programms.

Das bevorzugt zu verwendende anorganische Oxid kann beispielsweise durch Sprühtrockenen des vermahlenen Hydrogels, welches hierzu mit Wasser oder einem aliphatischen Alkohol vermischt wird, erhalten werden. Solche feinteiligen anorganischen Oxide sind auch im Handel erhältlich.

Das feinteilige anorganische Oxid weist ferner üblicherweise ein Porenvolumen von 0,1 bis 10 cm³/g, bevorzugt von 1,0 bis 4,0 cm³/g und eine spezifische Oberfläche von 10 bis 1000 m²/g, bevorzugt von 100 bis 500 m²/g auf, wobei hier die durch Quecksilber-Porosimetrie nach DIN 66133 und durch Stickstoff-Adsorption nach DIN 66131 bestimmten Werte zu verstehen sind.

Der pH-Wert des anorganischen Oxids, d.h. der negative dekadische Logarithmus der Protonenkonzentration, liegt vorzugsweise im Bereich von 1 bis 6,5, insbesondere im Bereich von 2 bis 6 und besonders bevorzugt im Bereich von 3,5 bis 5,5.

Als anorganische Oxide kommen vor allem die Oxide des Siliciums, des Aluminiums, des Titans oder eines der Metalle der I. bzw. der II. Hauptgruppe des Periodensystems in Betracht. Als ganz bevorzugtes Oxid wird neben Aluminiumoxid oder Magnesiumoxid oder einem Schichtsilikat Siliciumoxid (Kieselgel) verwendet. Es können auch Mischoxide wie Aluminiumsilikate oder Magesiumsilikate eingesetzt werden.

Die als Träger eingesetzten anorganischen Oxide enthalten auf ihrer Oberfläche Hydroxylgruppen. Durch Wasserabspaltung ist es möglich, den Gehalt an OH-Gruppen zu reduzieren oder ganz zu beseitigen. Dies kann durch thermische oder chemische Behandlung erfolgen. Eine thermische Behandlung erfolgt üblicherweise durch Erhitzen des anorganischen Oxids für von 1 bis 24 Stunden, bevorzugt von 2 bis 20 Stunden und insbesondere von 3 bis 12 Stunden, auf Temperaturen von 250 bis 900°C, bevorzugt von 600 bis 800°C. Die Hydroxylgruppen können auch auf chemischem Weg durch Behandeln der anorganischen Oxide mit üblichen Trocknungsmitteln wie SiCl₄, Chlorsilanen oder Aluminiumalkylen entfernt werden. Bevorzugt eingesetzte anorganische Oxide enthalten von 0,5 bis 5 Gew-% Wasser. Der Wassergehalt wird üblicherweise dadurch bestimmt, daß man das anorganische Oxid bei 160 °C unter Normaldruck bis zur Gewichtskonstanz trocknet. Die Gewichtsabnahme entspricht dem ursprünglichen Wassergehalt.

Vorzugsweise werden bei der Herstellung der titanhaltigen Feststoffkomponente a) pro Mol des anorganischen Oxids von 0,1 bis 1,0 mol, insbesondere von 0,2 bis 0,5 mol der chlorfreien Verbindung des Magnesiums verwendet.

Bei der Herstellung der citanhaltigen Feststoffkomponente a) kommen ferner C₁- bis C₈-Alkanole wie Methanol, Ethanol, n-Propanol, Isopropanol, n-Butanol, sek.-Butanol, tert.-Butanol, Isobutanol, n-Hexanol, n-Heptanol, n-Oktanol oder 2-Ethylhexanol oder deren Mischungen zum Einsatz. Bevorzugt wird Ethanol verwendet.

Die titanhaltige Feststoffkomponente a) enthält des weiteren noch Elektronendonorverbindungen, beispielsweise mono- oder polyfunktionelle Carbonsäuren, Carbonsäureanhydride oder Carbonsäureester, ferner Ketone, Ether, Alkohole, Lactone oder phosphor- oder siliciumorganische Verbindungen.

Bevorzugt werden als Elektronendonorverbindungen innerhalb der titanhaltigen Feststoffkomponente Carbonsäurederivate und insbesondere Phthalsäurederivate der allgemeinen Formel (II) 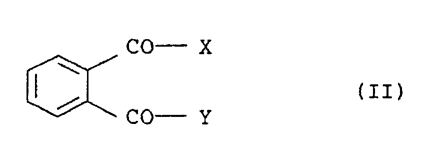 verwendet, wobei X und Y jeweils für ein Chlor- oder Bromatom oder einen C₁-C₁₀-Alkoxyrest oder gemeinsam für Sauerstoff in Anhydridfunkcion stehen. Besonders bevorzugte Elektronendonorverbindungen sind Phthalsäureester, wobei X und Y einen C₁-C₈-Alkoxyrest, beispielsweise einen Methoxy-, Ethoxy-, n-Propyloxy-, iso-Propyloxy- n-Butyloxy-, sek.-Butyloxy-, iso-Butyloxy- oder einen tert.-Butyloxyrest, bedeuten. Beispiele für vorzugsweise eingesetzte Phthalsäureester sind Diethylphthalat, Di-n-butylphthalat, Di-iso-butylphthalat, Dipentylphthalat, Dihexylphthalat, Di-nheptylphthalat, Di-n-octylphthalat oder Di-2-ethylhexylphthalat.

Weiter bevorzugte Elektronendonorverbindungen innerhalb der titanhaltigen Feststoffkomponente sind Diester von 3- oder 4-gliedrigen, gegebenenfalls substituierten Cycloalkyl-1,2-dicarbonsäuren, sowie Monoester von substituierten Benzophenon-2-carbonsäuren oder substituierten Benzophenon-2-carbonsäuren. Als Hydroxyverbindungen werden bei diesen Estern die bei Veresterungsreaktionen üblichen Alkanole verwendet, beispielsweise C₁-C₁₅-Alkanole oder C₅-C₇-Cycloalkanole, die ihrerseits eine oder mehrere C₁-C₁₀-Alkylgruppen tragen können, ferner C₆-C₁₀-Phenole.

Es können auch Mischungen verschiedener Elektronendonorverbindungen eingesetzt werden.

Die titanhaltige Feststoffkomponente a) kann nach an sich bekannten Methoden hergestellt werden, die beispielsweise in der EP-A 171 200, der GB-A 2 111 066, der US-A 48 57 613 und der US-A 52 88 824 beschrieben sind. Sie ist jedoch dadurch charakterisiert, daß man in der ersten Stufe ihrer Herstellung die chlorfreie Verbindung des Magnesiums in einem inerten Lösungsmittel verwendet und diese mit dem Träger und dem C₁- bis C₈-Alkanol zu einem chlorfreien Zwischenprodukt umsetzt, welches vorteilhaft ohne Reinigung oder Extraktion weiterverarbeitet wird.

Bei der Herstellung der titanhaltigen Feststoffkomponente a) wird bevorzugt folgendes zweistufige Verfahren angewandt:

In der ersten Stufe versetzt man zunächst in einem inerten Lösungsmittel, bevorzugt einem flüssigen Alkan oder einem aromatischen Kohlenwasserstoff, z.B. Toluol oder Ethylbenzol, das anorganische Oxid mit einer Lösung der chlorfreien Verbindung des Magnesiums, wonach man dieses Gemisch 0,5 bis 5 Stunden lang bei einer Temperatur von 10 bis 120°C in der Regel unter Rühren reagieren läßt. Anschließend fügt man üblicherweise unter ständigem Rühren bei Temperaturen von -20 bis 80°C, vorzugsweise von 0 bis 40°C den C₁-C₈-Alkanol im wenigstens 1,3-fachen, bevorzugt im 1,6-fachen bis 3-fachen und insbesondere im 1,8-fachen bis 2,0-fachen molaren Überschuß, bezogen auf die magnesiumhaltige Verbindung, hinzu. Dabei entsteht ein chlorfreies Zwischenprodukt, welches vorzugsweise ohne Reinigung oder Extraktion weiterverarbeitet wird. Nach etwa 10 bis 1-20 Minuten, vorzugsweise nach etwa 20 bis 60 Minuten, fügt man diesem Zwischenprodukt bei einer Temperatur von 10 bis 50°C das Titanhalogenid sowie die Elektronendonorverbindung hinzu. Dabei setzt man pro Mol Magnesium des aus der ersten Stufe erhaltenen Feststoffs von 1 bis 15 mol, bevorzugt von 2 bis 5 mol des Titanhalogenids und von 0,01 bis 1 mol, insbesondere von 0,3 bis 0,7 mol, der Elektronendonorverbindung ein. Dieses Gemisch läßt man wenigstens 10 Minuten, bevorzugt 30 Minuten und insbesondere von 45 bis 90 Minuten bei einer Temperatur im Bereich von 10 bis 150°C, insbesondere von 60 bis 130°C, im allgemeinen unter Rühren reagieren, der so erhaltene feste Stoff wird anschließend abfiltriert und mit einem C₇-C₁₀-Alkylbenzol, bevorzugt mit Ethylbenzol, gewaschen.

In der zweiten Stufe extrahiert man den aus der ersten Stufe erhaltenen Feststoff bei Temperaturen im Bereich von 100 bis 150°C mit überschüssigem Titantetrachlorid oder einer im Überschuß vorliegenden Lösung von Titantetrachlorid in einem inerten Lösungsmittel, vorzugsweise einem C₇-C₁₀-Alkylbenzol, wobei das Lösungsmittel wenigstens 5 Gew.-% Titantetrachlorid enthält. Die Extraktion wird in der Regel wenigstens 30 Minuten lang durchgeführt. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente a) wird mit Cokatalysatoren als Ziegler-Natta-Katalysatorsystem verwendet. Als Cokatalysatoren kommen dabei Aluminiumverbindungen b) und weitere Elektronendonorverbindungen c) in Betracht.

Geeignete Aluminiumverbindungen b) sind außer Trialkylaluminium auch solche Verbindungen, bei denen eine Alkylgruppe durch eine Alkoxygruppe oder durch ein Halogenatom, beispielsweise durch Chlor oder Brom, ersetzt ist. Die Alkylgruppen können gleich oder voneinander verschieden sein. Es kommen lineare oder verzweigte Alkylgruppen in Betracht. Bevorzugt werden Trialkylaluminiumverbindungen verwendet, deren Alkylgruppen jeweils 1 bis 8 C-Atome aufweisen, beispielsweise Trimethylaluminium, Triethylaluminium, Tri-iso-butylaluminium, Trioctylaluminium oder Methyldiethylaluminium oder Mischungen daraus.

Neben der Aluminiumverbindung b) verwendet man als weiteren Cokatalysator Elektronendonorverbindungen c) wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen, wobei die Elektronendonorverbindungen c) gleich oder verschieden von den zur Herstellung der titanhaltige Feststoffkomponente a) eingesetzten Elektronendonorverbindungen sein können. Bevorzugte Elektronendonorverbindungen sind dabei siliciumorganische Verbindungen der allgemeinen Formel (I)

R¹ ₙSi(OR²)₄₋ₙ (I)

wobei R¹ gleich oder verschieden ist und eine C₁-C₂₀-Alkylgruppe, eine 5- bis 7-gliedrige Cycloalkylgruppe, die ihrerseits durch C₁-C₁₀-Alkyl substituiert sein kann, eine C₆-C₁₈-Arylgruppe oder eine C₆-C₁₈-Aryl-C₁-C₁₀-alkylgruppe bedeutet, R² gleich oder verschieden ist und eine C₁-C₂₀-Alkylgruppe bezeichnet und n für die ganzen Zahlen 1, 2 oder 3 steht. Besonders bevorzugt werden solche Verbindungen, in denen R¹ eine C₁-C₈-Alkylgruppe oder eine 5- bis 7-gliedrige Cycloalkylgruppe sowie R² eine C₁-C₄-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan, Dimethoxydicyclohexylsilan, Dimethoxycyclohexylmethylsilan, Dimethoxyisopropyl-tert.-butylsilan, Dimethoxyisobutyl-sek.-butylsilan und Dimethoxyisopropyl-sek.-butylsilan hervorzuheben.

Die als Cokatalysatoren wirkenden Verbindungen b) und c) kann man sowohl einzeln, nacheinander in beliebiger Reihenfolge oder zusammen als Gemisch auf die titanhaltige Feststoffkomponente a) einwirken lassen. Üblicherweise geschieht dies bei Temperaturen von 0 bis 150°C, insbesondere von 20 bis 90°C und Drücken von 1 bis 100 bar, insbesondere von 1 bis 40 bar.

Bevorzugt werden die Cokatalysatoren b) in einer solchen Menge eingesetzt, da3 das Atomverhältnis zwischen Aluminium aus der Aluminiumverbindung b) und Titan aus der titanhaltigen Feststoffkomponente a) von 10:1 bis 800:1, insbesondere von 20:1 bis 200:1 beträgt.

Das zu den erfindungsgemäßen Propylenpolymerisaten führende, ebenfalls erfindungsgemäße Verfahren ist dadurch charakterisiert, daß man das Molverhältnis zwischen der Aluminiumverbindung b) und der weiteren Elektronendonorverbindung c) auf von 1,5:1 bis 9:1, insbesondere von 2:1 bis 8:1, eingestellt. Wird ein Molverhältnis größer 9:1 eingesetzt, ist die Stereospezifität der gebildeten Propylenhomopolymerisate im allgemeinen nicht ausreichend. Liegt das Verhältnis unter 1,5:1, ist das Verfahren aus wirtschaftlichen Gründen, insbesondere wegen der großen Mengen der dann eingesetzten weiteren Elektronendonorverbindung c), meist wenig vorteilhaft.

Das zu den erfindungsgemäßen Propylenpolymerisaten führende, ebenfalls erfindungsgemäße Verfahren kann in den üblichen, für die Polymerisation von C₂-C₁₀-Alk-1-enen verwendeten Reaktoren entweder absatzweise oder bevorzugt kontinuierlich u.a. in Lösung, als Suspensionspolymerisation oder bevorzugt als Gasphasenpolymerisation durchgeführt werden. Geeignete Reaktoren sind u.a. kontinuierlich betriebene Rührreaktoren, Schleifenreaktoren oder Wirbelbettreaktoren. Wird absatzweise gearbeitet, werden die Stufen nacheinander durch Variation der Reaktionsbedingungen polymerisiert. In der Regel wird jedoch kontinuierlich gearbeitet, wobei zunächst in der ersten Stufe in einem oder mehreren Reaktoren die Matrix und anschließend in einem oder mehreren weiteren Reaktoren die Elastomerphase hergestellt wird. Darüberhinaus ist es möglich, in anschließenden Stufen weitere Homo- oder Copolymerisate von C₂-C₁₀-Alk-1-enen hinzuzupolymerisieren. Es ist auch möglich, verschiedene Reaktortypen zu kombinieren. In einer besonders bevorzugten Ausführungsform erfolgt die Herstellung der Copolymerisate in einem mehrstufigen, insbesondere zweistufigen, Gasphasen-Verfahren, wobei als Reaktoren kontinuierlich betriebene Rührkessel eingesetzt werden, die ein Festbett aus feinteiligem Polymerisat enthalten, welches üblicherweise durch geeignete Rührvorrichtungen in Bewegung gehalten wird.

Das zu den erfindungsgemäßen Propylenpolymerisaten führende, ebenfalls erfindungsgemäße Verfahren wird in der weise durchgeführt, daß man zur Herstellung der Matrix in der ersten Polymerisationsstufe Propylen bzw. eine Monomermischung aus Propylen und untergeordneten Mengen anderer Alk-1-ene mit bis zu 10 C-Atomen bei einer Temperatur von 50 bis 120°C, bevorzugt von 60 bis 90°C, und einem Druck von 15 bis 40 bar, bevorzugt von 20 bis 35 bar, polymerisiert. Die mittlere Verweilzeit beträgt in der Regel von 1,0 bis 3,0 Stunden, bevorzugt von 0,5 bis 5 Stunden. Vorzugsweise wählt man die Reaktionsbedingungen so, daß in der ersten Polymerisationsstufe pro Mol der Aluminiumkomponente b) von 0,05 bis 2 kg, bevorzugt von 0,1 bis 1,5 kg, der Matrix gebildet werden. Die Polymerisation wird üblicherweise in Anwesenheit von Wasserstoff durchgeführt, wobei vorzugsweise ein Partialdruckverhältnis zwischen Propylen und Wasserstoff von 30:1 bis 180:1, insbesondere von 30:1 bis 150:1 eingestellt wird.

Das erhaltene Propylenpolymerisat wird zusammen mit dem Katalysator aus der ersten Polymerisationsstufe ausgetragen und in die zweite Polymerisationsstufe eingeführt, wo diesem ein Copolymerisat aus Propylen und anderen Alk-1-en mit bis zu 10 C-Atomen hinzupolymerisiert wird. Die Menge der zugegebenen Monomere wird dabei in der Regel so bemessen, daß das Verhältnis der Partialdrücke von Propylen und den anderen Alk-1-en mit bis zu 10 C-Atomen im Bereich von 0,5:1 bis 20:1, insbesondere im Bereich von 1,0:1 bis 10:1, liegt. Durch geeignete Wahl der Reaktionsparameter wird darüber hinaus üblicherweise das Gewichtsverhältnis zwischen den in der ersten und den in der zweiten Pclymerisationsstufe umgesetzten Monomeren so eingestellt, daß es im Bereich von 0,5 : 1 bis 20 : und insbesondere im Bereich von 1,0 : 1 bis 15 : 1 liegt.

Die Polymerisation erfolgt in der zweiten Polymerisationsstufe bei einer Temperatur von 30 bis 100°C, bevorzugt von 50 bis 90°C, und einem Druck von 5 bis 40 bar, bevorzugt von 10 bis 35 bar. Die mittlere Verweilzeit des Reaktionsgemisches beträgt in der Regel von 0,5 bis 5 Stunden, bevorzugt von 1,0 bis 3,0 Stunden. Der Druck liegt in der zweiten Polymerisationsstufe vorzugsweise wenigstens 3 bar unter den Druck der ersten Polymerisationsstufe. Auch in der zweiten Polymerisationsstufe erfolgt die Polymerisation vorzugsweise in Anwesenheit von Wasserstoff, wobei in der Regel bei einem Partialdruckverhältnis zwischen Propylen und Wasserstoff von 100:1 bis 5:1, insbesondere von 60:1 bis 10:1 gearbeitet wird.

Weiterhin kann es sich empfehlen, dem Reaktionsgemisch der zweiten Polymerisationsstufe ein C₁-C₈-Alkanol, insbesondere ein C₁-C₄-Alkanol, hinzufügen, welches die Aktivität des Ziegler-Natta-Katalysators beeinflußt. Hierfür gut geeignete Alkanole sind beispielsweise Methanol, Ethanol, n-Propanol, n-Butanol und ganz besonders Isopropanol. Die Menge des C₁-C₈-Alkanols wird im allgemeinen so bemessen, daß das Molverhältnis zwischen dem C₁-C₈-Alkanol und der als Cokatalysator dienenden Aluminiumverbindung b) von 0,01:1 bis 10:1, insbesondere von 0,02:1 bis 5:1, beträgt.

Die mittleren Molmassen (Gewichtsmittel) der erfindungsgemäßen Copolymerisate des Propylens liegen in der Regel im Bereich von 10 000 bis 1 000 000 g/mol und die Schmelze-Fließraten (MFR) im Bereich von 0,1 bis 100 g/10 min, vorzugsweise von 0,2 bis 20 g/10 min. Die Schmelze-Fließrate (MFR) entspricht dabei der Menge an Polymerisat, die innerhalb von 10 Minuten aus der nach ISO 1133 genormten Prüfvorrichtung bei einer Temperatur von 230°C und unter einem Gewicht von 2,16 kg ausgepreßt wird.

Die erfindungsgemäßen Propylenpolymerisate zeichnen sich gegenüber den bisher bekannten Propylenpolymerisaten durch einen höheren Anteil an Polymerketten mit langen, fehlerfrei isotaktischen Polymersequenzen in der Matrix aus. Dies äußert sich beispielsweise in einem verbesserten Verhältnis von Steifigkeit und Zähigkeit. Darüber hinaus weisen die erfindungsgemäßen Copolymerisate auch reduzierte Chlorgehalte auf. Die Produktivität des zur Herstellung dieser Copolymerisate verwendeten Verfahrens ist gegenüber den bekannten Verfahren deutlich erhöht.

Aufgrund ihrer guten mechanischen Eigenschaften eignen sich die erfindungsgemäßen Propylenpolymerisate vor allem für die Herstellung von Folien, Fasern oder Formkörpern.

### Beispiele

### Zur Charakterisierung der Propylenpolymerisate wurden folgende Prüfungen durchgeführt:

Bestimmung des xylollöslichen Anteils:
   nach ISO-Norm 1873-1:1991.
Bestimmung des DSC-Schmelzpunkts:
   Nach ISO-Norm 3146 mit einer Aufheizrate von 10°C pro Minute.
Bestimmung des Schmelze-Fließrate (MFR) :
   nach ISO-Norm 1133, bei 230°C und unter einem Gewicht von 2,16 kg.
Bestimmung der Produktivität:
   Die Produktivität ist die Menge an Polymerisat in Gramm, die pro Gramm eingesetzter titanhaltiger Feststoffkomponente a) erhalten wurde.
Fraktionierung nach Kristallinität:
   Die Auftrennung des Propylenpolymerisats bezüglich der Kristallinität erfolgte durch eine präparative Fraktionierung durch Temperature Rising Elution Fractionation (TREF). Hierzu wurden jeweils 5 g des Propylenpolymerisats in 400 ml siedendem Xylol gelöst und die Lösung dann linear mit einer Kühlrate von 10°C/h auf 25°C abgekühlt, wobei der Großteil des Polymerisats ausfiel.
   Die Kristallsuspension wurde in eine 500 ml fassende, temperierbare Extraktionsapparatur überführt, die der von W. Holtup in Makromol. Chem. 178, 2335 (1977) beschrieben entspricht, und auf die erste Elutionstemperatur erwärmt. Die Polypropylenkristalle wurden bei dieser Temperatur unter heftiger Durchmischung 15 Minuten extrahiert. Anschließend wurde die Polymerlösung abgelassen, während die Polymerisatkristalle im Extraktor zurückblieben. Das gelöste Polymerisat wurde in kaltem Aceton (Temperatur < 0°C) ausgefällt, abfiltriert und 4 bis 5 Stunden bei 100°C im Vakuum getrocknet.
   Der Extraktor wurde nun auf die nächste Elutionstemperatur erwärmt und es wurden 400 ml Xylol der selben Temperatur hinzugegeben. Es wurde wiederum 15 Minuten unter heftiger Durchmischung extrahiert, die Polymerlösung abgelassen, das gelöste Polymerisat in kaltem Aceton ausgefällt, abfiltriert und getrocknet.
   Diese Schritte wurden so lange wiederholt, bis sich das gesamte Polymerisat gelöst hatte. Die durch Ausfällen der TREF-Fraktionen wiedergefundenen Polymerisatanteile lagen jeweils zwischen 99,0 und 100 Gew.-%. Um die weiteren Berechnungen zu erleichtern, beziehen sich die in der Tabelle 2 angegebenen TREF-Fraktionen auf die wiedergefundenen Anteile, d.h. die Summe der TREF-Fraktionen beträgt 100,0 Gew.-%.
   Der Elastomeranteil entspricht den bis einschließlich 80°C gelösten Anteilen, der Matrixanteil ist die Summe aller Fraktionen, die sich bei höheren Elutionstemperaturen gelöst haben. Der bei den einzelnen Temperaturen unlösliche Matrixanteil ergibt sich aus dem Verhältnis der TREF-Fraktion bei der entsprechenden Temperatur zum gesamten Matrixanteil.
Bestimmung des Elastizitätsmoduls (Zug-E-Modul) :
   Nach ISO-Norm 527-2, bei 23°C Meßtemperatur
Bestimmung der Kerbschlagzähigkeit :
   Als Izod-Kerbschlagzähigkeit nach ISO-Norm 180/1A
Bestimmung des Chlorgehalts:
   Der Chlorgehalt der Polymerisate wurde durch mikrocoulometrische Bestimmung nach DIN 51408 Teil 2 ermittelt.
Bestimmung des mittleren Teilchendurchmessers :
   Zur Bestimmung des mittleren Teilchendurchmessers des Kieselgels wurde durch Coulter-Counter-Analyse nach ASTM Standard D 4438 die Korngrößenverteilung der Kieselgelpartikel ermittelt und daraus der volumenbezogene Mittelwert (Medianwert) berechnet.
Bestimmung des Porenvolumens:
   Durch Quecksilber-Porosimetrie nach DIN 66133
Bestimmung der spezifischen Oberfläche:
   Durch Stickstoff-Adsorption nach DIN 66131
Bestimmung des Wassergehalts:
   Zur Bestimmung des Wassergehalts wurden 5 g Kieselgel bei 160°C unter Normaldruck 15 min getrocknet (Gewichtskonstanz). Die Gewichtsabnahme entspricht dem ursprünglichen Wassergehalt.
Bestimmung des makroskopischen Volumenanteils der Hohlräume und Kanäle :
   Die Bestimmung der mittleren Teilchengröße der Primärpartikel sowie des makroskopischen Volumenanteils der Hohlräume und Kanäle des verwendeten Kieselgels geschah mit Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des Kieselgels. Die erhaltenen elektronenmikroskopischen Aufnahmen wurden in ein Grauwert-Binärbild überführt und mittels des Software-Pakets Analysis der Fa. SIS digital ausgewertet.

### Beispiel 1

### Herstellung der titanhaltigen Feststoffkomponente a₁)

In einer ersten Stufe wurde feinteiliges, sphärisches Kieselgel (SiO₂), das einen mittleren Teilchendurchmesser von 45 µm, ein Porenvolumen von 1,5 cm³/g, eine spezifische Oberfläche von 260 m²/g und einen Wassergehalt von 2,7 Gew.-% aufwies, mit einer Lösung von n-Butyloctylmagnesium in n-Heptan versetzt, wobei pro Mol SiO₂ 0,3 mol der Magnesiumverbindung eingesetzt wurden. Das feinteilige Kieselgel wies einen pH-Wert von 5,5 auf und war zusätzlich durch eine mittlere Teilchengröße der Primärpartikel von 7 µm und durch Hohlräume und Kanäle mit einem mittleren Durchmesser von 5-10 µm charakterisiert, wobei der makroskopische Volumenanteil der Hohlräume und Kanäle am Gesamtpartikel bei etwa 25 % lag. Die Lösung wurde 30 Minuten.bei 95°C gerührt, danach auf 20°C abgekühlt, wonach die 1,8-fache molare Menge, bezogen auf die magnesiumorganische Verbindung, an Ethanol unter Kühlung zugesetzt wurde, wobei die Reaktionstemperatur auf unter 45°C gehalten wurde. Nach 45 Minuten wurde das chlorfreie Zwischenprodukt ohne Reinigung bzw. Extraktionsschritt unter ständigem Rühren mit 4,2 mol Titantetrachlorid und 0,6 mol Di-n-butylphthalat, jeweils bezogen auf 1 mol Magnesium, versetzt. Anschließend wurde 1 Stunde bei 100°C gerührt, der so erhaltene feste Stoff abfiltriert und mehrmals mit Ethylbenzol gewaschen.

Das daraus erhaltene Festprodukt extrahierte man 90 Minuten lang in einer zweiten Stufe bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.

Die so hergestellte titanhaltige Feststoffkomponente a₁) enthielt

| | |
|---|---|
| 3,8 | Gew.-% Ti |
| 7,2 | Gew.-% Mg |
| 28,1 | Gew.-% Cl. |

### Polymerisation

Die Herstellung der Propylenpolymerisate wurde in einer Kaskade aus zwei hintereinander geschalteten vertikal gerührten Gasphasenreaktoren mit einem Nutzvolumen von jeweils 200 l in Anwesenheit von Wasserstoff als Molmassenregler durchgeführt. Beide Reaktoren enthielten ein bewegtes Festbett aus feinteiligem Polymerisat.

In den ersten Gasphasenreaktor wurde gasförmiges Propylen eingeleitet und unter den in der Tabelle 1 aufgeführten Temperaturund Druckbedingungen kontinuierlich polymerisiert. Dies erfolgte bei einer mittleren Verweilzeit von ca. 1,5 Stunden, wobei pro Stunde 1,4 g der titanhaltigen Feststoffkomponente a₁), 90 mmol Triethylaluminium b) und 22,5 mmol Dimethoxydicyclopentylsilan c) verwendet wurden.

Das nach Beendigung der Gasphasenpolymerisation erhaltene Propylenhomopolymerisat wurde anschließend zusammen mit noch aktiven Katalysatorbestandteilen in den zweiten Gasphasenreaktor übergeführt. Dort wurde diesem Propylenhomopolymerisat ein Gemisch aus Propylen und Ethylen unter den in der nachfolgenden Tabelle 1 angegebenen Bedingungen (Druck, Temperatur, Partialdruckverhältnis Propylen zu Ethylen, Gewichtsverhältnis umgesetzte Monomere der ersten Stufe zu umgesetzte Monomere der zweiten Stufe) und in Anwesenheit von Isopropanol als Regler kontinuierlich hinzupolymerisiert.

### Vergleichsbeispiel A

### Herstellung der titanhaltigen Feststoffkomponente a_{A})

In einer ersten Stufe wurde das auch in Beispiel 1 eingesetzte feinteilige, sphärische Kieselgel mit einer Lösung von n-Butyloctylmagneslum in n-Heptan versetzt, wobei pro Mol SiO₂ 0,3 mol der Magnesiumverbindung eingesetzt wurden. Die Lösung wurde 45 Minuten bei 95°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 mol Ethanol pro Mol Magnesium versetzt. Dieses Gemisch wurde 0,5 Stunden bei 80°C gerührt und anschließend mit 7,2 mol Titantetrachlorid und 0,5 mol Di-n-butylphthalat, jeweils bezogen auf 1 mol Magnesium, versetzt. Anschließend wurde 1 Stunde bei 100°C gerührt, der so erhaltene feste Stoff abfiltriert und mehrmals mit Ethylbenzol gewaschen.

Das daraus erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.

Die so hergestellte titanhaltige Feststoffkomponente a_{A}) enthielt

| | |
|---|---|
| 3,5 | Gew.-% Ti |
| 7,4 | Gew.-% Mg |
| 28,2 | Gew.-% Cl. |

### Polymerisation

Es wurde analog zum erfindungsgemäßen Beispiel 1 zunächst im ersten Reaktor ein Propylenhomopolymerisat hergestellt, dieses danach in den zweiten Reaktor übergeführt und dem Propylenhomopolymerisat dort ein Gemisch aus Propylen und Ethylen hinzupolymerisiert. Dies geschah unter analogen Reaktionsbedingungen wie im Beispiel 1 beschrieben, wobei aber die titanhaltigen Feststoffkomponente a_{A}) eingesetzt wurde. Es wurden pro Stunde 2,2 g der titanhaltigen Feststoffkomponente a_{A}), 90 mmol Triethylaluminium b) und 22,5 mmol Dimethoxydicyclopentylsilan c) verwendet.

### Beispiele 2 bis 4

Das erfindungsgemäße Beispiel 1 wurde mit dem gleichen Kacalysatorsystem wiederholt, wobei jetzt die Reaktionsbedingungen Druck, Temperatur, Partialdruckverhältnis Propylen zu Ethylen und Gewichtsverhältnis umgesetzte Monomere der ersten Stufe zu umgesetzte Monomere der zweiten Stufe entsprechend der Tabelle 1 variiert wurden.

### Vergleichsbeispiele B bis D

Die erfindungsgemäßen Beispiele 2 bis 4 wurden jeweils analog wiederholt, wobei aber jeweils die titanhaltige Feststoffkomponente a_{A}) eingesetzt wurde.

In der nachfolgenden Tabelle 1 sind sowohl für die erfindungsgemäßen Beispiele 1 bis 4 als auch für die Vergleichsbeispiele A bis D die jeweiligen Reaktionsbedingungen aufgeführt.

Die Tabelle 2 gibt für die erfindungsgemäßen Beispiele 1 bis 4 und die Vergleichsbeispiele A bis D die folgenden nach der ersten Polymerisationsstufe bestimmten Eigenschaften der Homopolypropylenmatrix wieder: xylollöslicher Anteil, Schmelzpunkt sowie die Produktivität.

Darüber hinaus enthält die Tabelle 2 die am Endprodukt ermittelten Anteile der TREF-Fraktionen und die daraus berechneten Gehalte an Elastomer und Matrix sowie die in Xylol unlöslichen Anteile bezogen auf das gesamte Polymerisat und auf die Matrix. Weiterhin sind die Schmelze-Fließrate (MFR) des Endprodukts, die Steifigkeit (Zug-E-Modul), die Izod-Kerbschlagzähigkeiten bei -20°C und -40°C und der Chlorgehalt im Polymerisat aufgeführt.

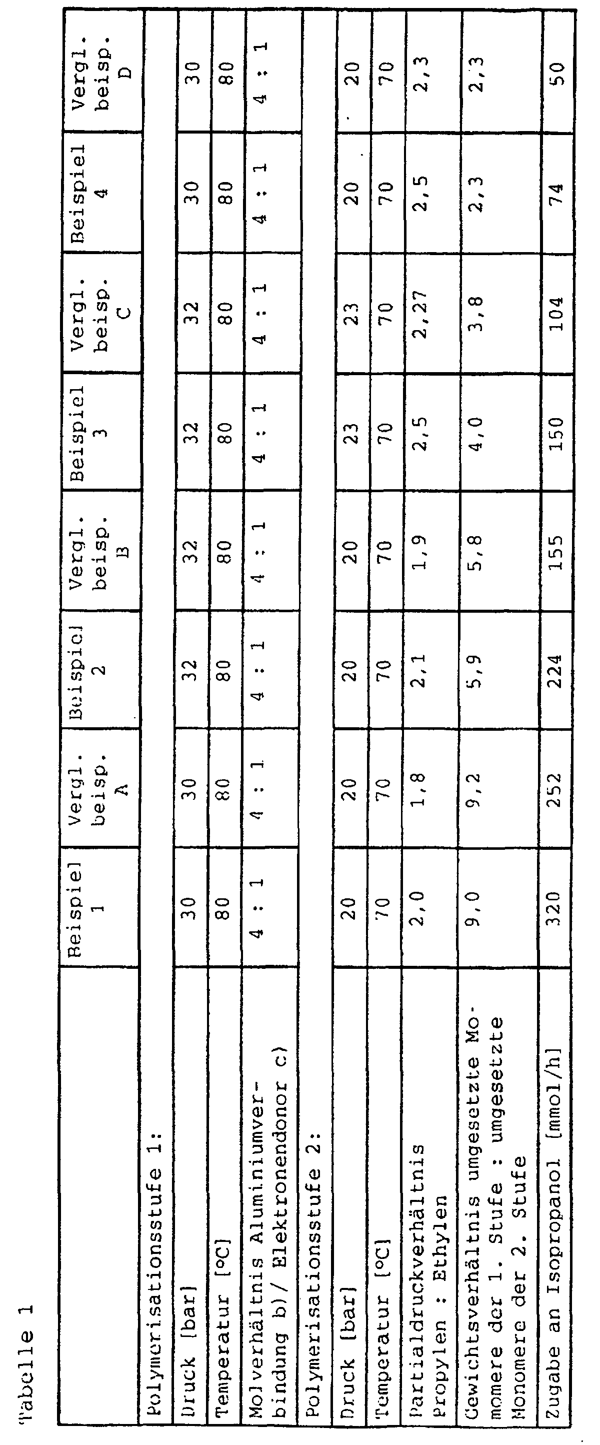

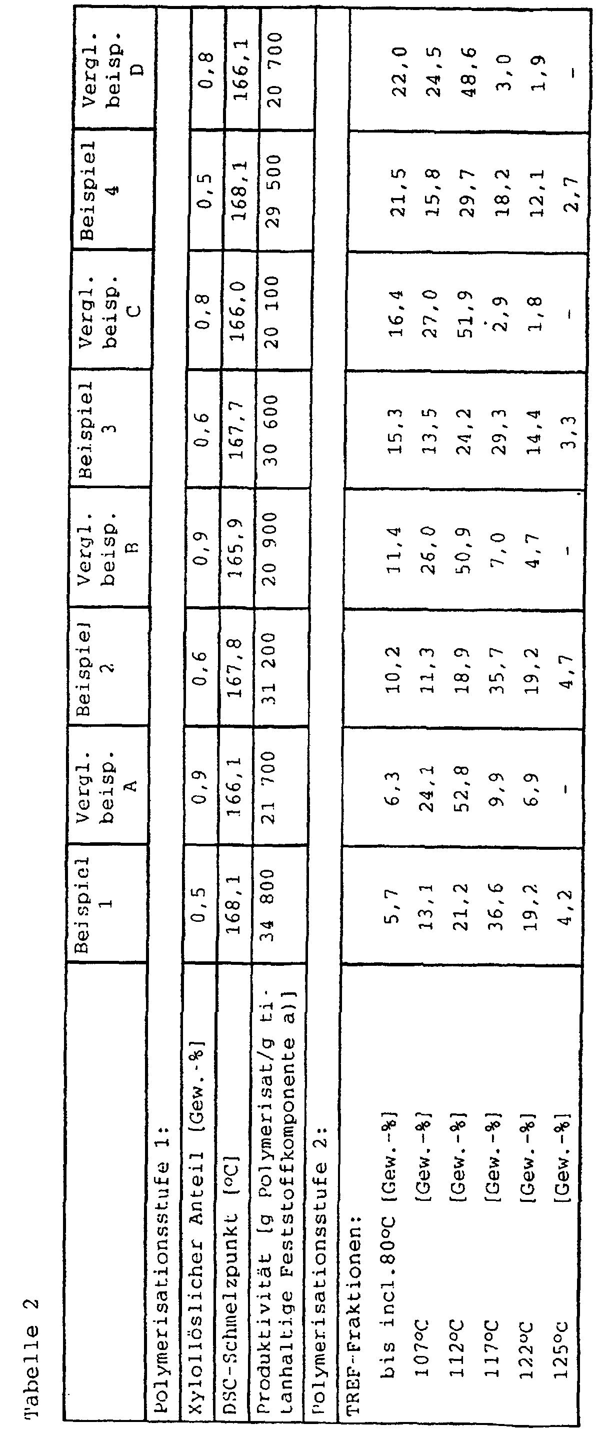

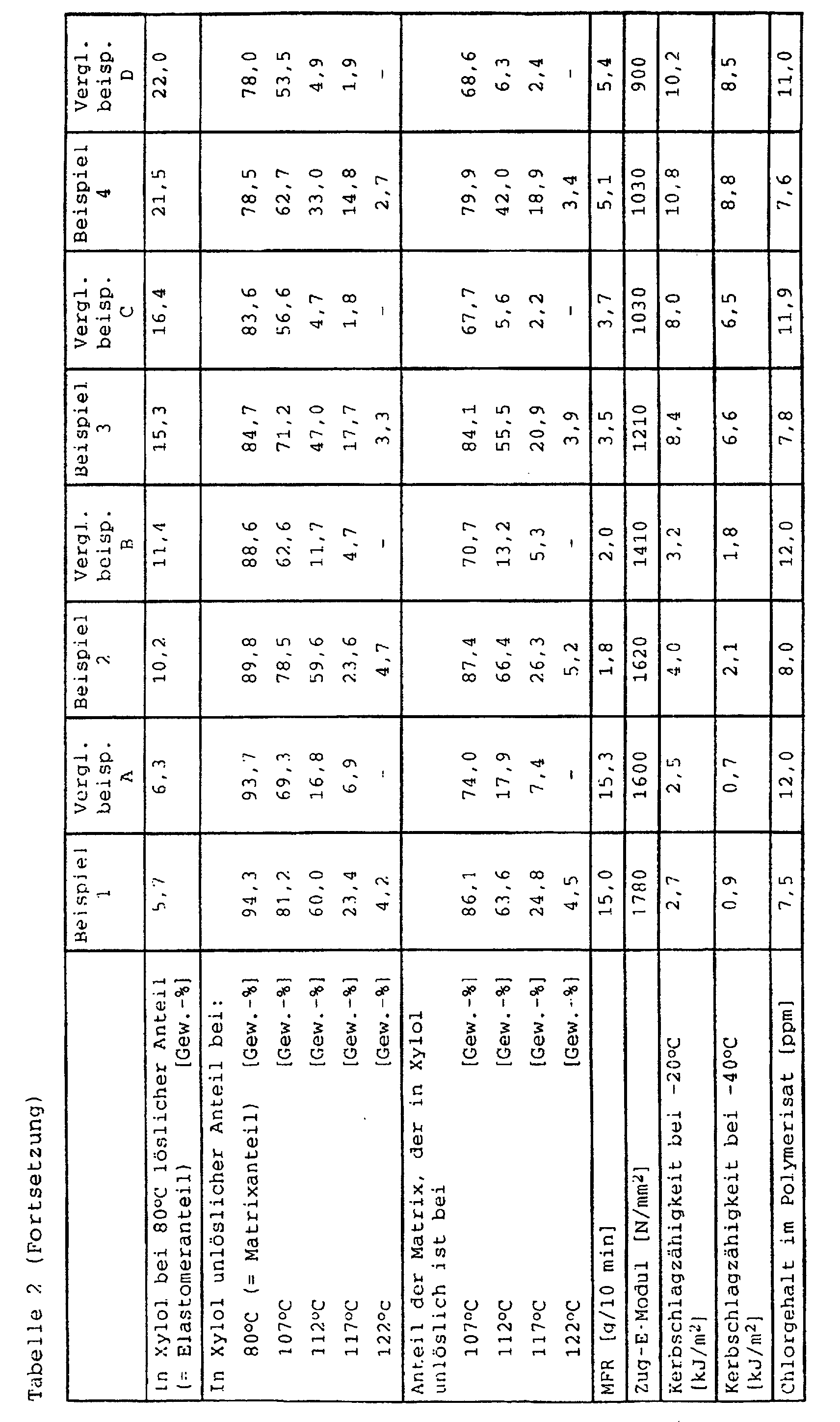

Ein vergleich zwischen den erfindungsgemäßen Beispielen 1 bis 4 und den Vergleichsbeispielen A bis D macht deutlich, daß die erfindungsgemäßen Propylenpolymerisate einen signifikant höheren Gehalt an höchstisotaktischen Fraktionen aufweisen. Sie haben eine erhöhte Steifigkeit (Zug-E-Modul) bei gleichzeitig angehobener Kerbschlagzähigkeit, d.h. sie weisen ein verbessertes Verhältnis von Steifigkeit und Zähigkeit auf. Außerdem haben sie einen verringerten Chlorgehalt.

## Patentansprüche

1. Propylenpolymerisate, enthaltend eine Matrix eines Propylenhomopolymerisats und ein Copolymerisat aus Propylen und anderen Alkenen, **dadurch gekennzeichnet, daß** bei der Auftrennung der Propylenpolymerisate nach Taktizität und Comonomerverteilung der Polymerketten, dadurch daß man die Propylenpolymerisate zunächst in siedendem Xylol löst, anschließend die Lösung mit einer Kühlrate von 10°C/h auf 25°C abkühlt und dann bei steigender Temperatur die Propylenpolymerisate in Fraktionen unterschiedlicher Löslichkeit auftrennt, von der Matrix, die bei Erwärmen der abgekühlten Propylenpolymerisatlösung auf eine Temperatur von 80°C ungelöst verbleibt, entweder eine oder mehrere der Bedingungen, daß
i) mehr als 20 Gew.-% der Matrix bei weiterem Erwärmen auf eine Temperatur von 112°C ungelöst bleiben oder
ii) mehr als 8 Gew.-% der Matrix bei weiterem Erwärmen auf eine Temperatur von 117°C ungelöst bleiben oder
iii) mehr als 1 Gew.-% der Matrix bei weiterem Erwärmen auf eine Temperatur von 122°C ungelöst bleiben,
erfüllt werden.

2. Propylenpolymerisate gemäß Anspruch 1, **dadurch gekennzeichnet, daß** von der Matrix entweder eine oder mehrere der Bedingungen, daß
i) mehr als 30 Gew.-% der Matrix bei weiterem Erwärmen auf eine Temperatur von 112°C ungelöst bleiben oder
ii) mehr als 12 Gew.-% der Matrix bei weiterem Erwärmen auf eine Temperatur von 117°C ungelöst bleiben oder
iii) mehr als 2 Gew.-% der Matrix bei weiterem Erwärmen auf eine Temperatur von 122°C ungelöst bleiben,
erfüllt werden.

3. Verfahren zur Herstellung von Propylenpolymerisaten, bei dem man in einer ersten Polymerisationsstufe bei Temperaturen von 50 bis 120°C und Drücken von 15 bis 40 bar Propylen polymerisiert und anschließend in einer zweicen Polymarisationsstufe bei Temperaturen von 30 bis 100°C und Drücken von 5 bis 40 bar ein Copolymerisat aus Propylen und anderen Alk-1-enen mit bis zu 10 C-Atomen hinzupolymerisiert und die Polymerisation in Gegenwart eines Ziegler-Natta-Katalysatorsystems durchführt, enthaltend als aktive Bestandteile
a) eine titanhaltige Feststoffkomponente, die durch Umsetzung eines Titanhalogenids mit einer chlorfreien Verbindung des Magnesiums, einem anorganischen Oxid als Träger, einem C₁-C₈-Alkanol und einer Elektronendonorverbindung in der Weise erhalten wird, daß man zunächst
in einer ersten Stufe das anorganische Oxid als Träger mit einer Lösung der chlorfreien Verbindung des Magnesiums in einem inerten Lösungsmittel versetzt, dabei dieses Gemisch von 0,5 bis 5 Stunden bei einer Temperatur von 10 bis 120°C reagieren läßt und anschließend bei einer Temperatur von -20 bis 80°C unter ständigem Durchmischen mit einem C₁-C₈-Alkanol im wenigstens 1,3-fachen molaren Überschuß, bezogen auf die Verbindung des Magnesiums, zu einem chlorfreien Zwischenprodukt umsetzt, danach diesem das Titanhalogenid und die Elektronendonorverbindung hinzufügt, das daraus resultierende Gemisch wenigsten 10 Minuten bei einer Temperatur von 10 bis 150°C reagieren läßt, den so erhaltenen festen Stoff anschließend abfiltriert, wäscht und
in einer zweiten Stufe den aus der ersten Stufe erhaltenen Feststoff in einem inerten Lösungsmittel, welches wenigstens 5 Gew.-% Titantetrachlorid enthält, extrahiert und mit einem flüssigen Alkan wäscht,
sowie als Cokatalysatoren
b) eine Aluminiumverbindung und
c) eine weitere Elektronendonorverbindung,
**dadurch gekennzeichnet, daß** man in der ersten Polymerisationsstufe das Molverhältnis zwischen der Aluminiumverbindung b) und der weiteren Elektronendonorverbindung c) auf ein Verhältnis von 1,5 : 1 bis 9 : 1 einstellt.

4. Verfahren zur Herstellung von Propylenpolymerisaten nach Anspruch 3, **dadurch gekennzeichnet, daß** man in der ersten Polymerisationsstufe das Molverhältnis zwischen der Aluminiumverbindung b) und der weiteren Elektronendonorverbindung c) auf ein Verhältnis von 2 : 1 bis 8 : 1 einstellt.

5. Verfahren zur Herstellung von Propylenpolymerisaten nach Anspruch 3 oder 4, wobei man bei der Herstellung der titanhaltigen Feststoffkomponente a) ein anorganisches Oxid als Träger verwendet, das einen pH-Wert von 1 bis 6,5, einen mittleren Teilchendurchmesser von 5 bis 200 µm und Hohlräume bzw. Kanäle mit einem mittleren Durchmesser von 1 bis 20 µm aufweist, deren makroskopischer Volumenanteil am Gesamtpartikel im Bereich von 5 bis 30 % liegt.

6. Verfahren zur Herstellung von Propylenpolymerisaten nach den Ansprüchen 3 bis 5, wobei man bei der Herstellung der titanhaitigen Feststoffkomponente a) ein Kieselgel als anorganisches Oxid verwendet.

7. Verfahren zur Herstellung von Propylenpolymerisaten nach den Ansprüchen 3 bis 6, wobei man als Aluminiumverbindung b) eine Trialkylaluminiumverbindung einsetzt, deren Alkylgruppen jeweils bis 8 C-Atome aufweisen.

8. Verfahren zur Herstellung von Propylenpolymerisaten nach den Ansprüchen 3 bis 7, wobei man als weitere Elektronendonorverbindung c) mindestens eine siliciumorganische Verbindung der allgemeinen Formel (I)
R¹ ₙSi(OR²)₄₋ₙ (I)
verwendet, in der R¹ gleich oder verschieden ist und eine C₁-C₂₀-Alkylgruppe, eine 5- bis 7-gliedrige Cycloalkylgruppe, die ihrerseits durch C₁-C₁₀-Alkyl substituiert sein kann, eine C₆-C₁₈-Arylgruppe oder eine C₆-C₁₈-Aryl-C₁-C₁₀-alkylgruppe bedeutet, R² gleich oder verschieden ist und eine C₁-C₂₀-Alkylgruppe bedeutet und n für die ganzen Zahlen 1, 2 oder 3 steht.

9. Verfahren zur Herstellung von Propylenpolymerisaten nach den Ansprüchen 3 bis 8, wobei man die Polymerisation in der zweiten Polymerisationsstufe in Gegenwart eines C₁-C₈-Alkanols durchführt.

10. Propylenpolymerisate, erhältlich nach einem Verfahren gemäß den Ansprüchen 3 bis 9.

11. Verwendung der Propylenpolymerisate gemäß den Ansprüchen 1, 2 oder 10 zur Herstellung von Folien, Fasern oder Formkörpern.

12. Folien, Fasern oder Formkörper aus den Propylenpolymerisaten gemäß den Ansprüchen 1, 2 oder 10.

## Claims

1. A propylene polymer containing a matrix of a propylene homopolymer and a copolymer of propylene and other alkenes, wherein, during the separation of the propylene polymers according to tacticity and comonomer distribution of the polymer chains, by first dissolving the propylene polymers in boiling xylene, then cooling the solution at a cooling rate of 10°C/h to 25°C and thereafter increasing the temperature, separating the propylene polymers into fractions of different solubility, either one or more of the conditions that
i) more than 20 % by weight of the matrix remain undissolved on further heating to 112°C or
ii) more than 8 % by weight of the matrix remain undissolved on further heating to 117°C or
iii) more than 1 % by weight of the matrix remain undissolved on further heating to 122°C
are fulfilled by the matrix which remains undissolved on heating the cooled propylene polymer solution to 80°C.

2. A propylene polymer as claimed in claim 1, wherein either one or more of the conditions that
i) more than 30 % by weight of the matrix remain undissolved on further heating to 112°C or
ii) more than 12 % by weight of the matrix remain undissolved on further heating to 117°C or
iii) more than 2 % by weight of the matrix remain undissolved on further heating to 122°C
are fulfilled by the matrix.

3. A process for the preparation of propylene polymers, in which propylene is polymerized in a first polymerization stage at from 50 to 120°C and from 15 to 40 bar and then a copolymer of propylene and other alk-1-enes of up to 10 carbon atoms is polymerized thereon in a second polymerization stage at from 30 to 100°C and from 5 to 40 bar and the polymerization is carried out in the presence of a Ziegler-Natta catalyst system containing, as active components,
a) a titanium-containing solid component which is obtained by reacting a titanium halide with a chlorine-free compound of magnesium, an inorganic oxide as carrier, a C₁-C₈-alkanol and an electron donor compound by a procedure in which first,
in a first stage, a solution of the chlorine-free compound of magnesium in an inert solvent is added to the inorganic oxide as carrier, this mixture is allowed to react for from 0.5 to 5 hours at from 10 to 120°C and is then reacted, at from -20 to 80°C with continuous mixing, with a C₁-C₈-alkanol in at least a 1.3-fold molar excess, based on the compound of magnesium, to give a chlorine-free intermediate, the titanium halide and the electron donor compound are then added to said intermediate, the resulting mixture is allowed to react for at least 10 minutes at from 10 to 150°C and the solid substance thus obtained is then filtered off and washed, and,
in a second stage, the solid obtained from the first stage is extracted in an inert solvent which contains at least 5 % by weight of titanium tetrachloride and is washed with a liquid alkane,
and, as cocatalysts,
b) an aluminum compound and
c) a further electron donor compound,
wherein, in the first polymerization stage, the molar ratio of the aluminum compound b) to the further electron donor compound c) is adjusted to a ratio of from 1.5 : 1 to 9 : 1.

4. A process for the preparation of propylene polymers as claimed in claim 3, wherein, in the first polymerization stage, the molar ratio of the aluminum compound b) to the further electron donor compound c) is adjusted to a ratio of from 2 : 1 to 8 : 1.

5. A process for the preparation of propylene polymers as claimed in claim 3 or 4, wherein the titanium-containing solid component a) is prepared using, as carrier, an inorganic oxide which has a pH of from 1 to 6.5, a median particle diameter from 5 to 200 µm and cavities or channels with an average diameter of from 1 to 20 µm, whose macroscopic volume fraction is from 5 to 30 %, based on the total particle.

6. A process for the preparation of propylene polymers as claimed in any of claims 3 to 5, wherein a silica gel is used as the inorganic oxide in the preparation of the titanium-containing solid component a).

7. A process for the preparation of propylene polymers as claimed in any of claims 3 to 6, wherein a trialkylaluminum compound whose alkyl groups are each of 1 to 8 carbon atoms is used as the aluminum compound b).

8. A process for the preparation of propylene polymers as claimed in any of claims 3 to 7, wherein at least one organosilicon compound of the formula (I)
R¹ ₙSi(OR²)₄₋ₙ (I)
where the radicals R¹ are identical or different and are each C₁-C₂₀-alkyl, 5- to 7-membered cycloalkyl which in turn may be substituted by C₁-C₁₀-alkyl, or C₆-C₁₈-aryl or C₆-C₁₈-aryl-C₁-C₁₀-alkyl, the radicals R² are identical or different and are each C₁-C₂₀-alkyl and n is the integer 1, 2 or 3, is used as a further electron donor compound c).

9. A process for the preparation of propylene polymers as claimed in any of claims 3 to 8, wherein the polymerization in the second polymerization stage is carried out in the presence of a C₁-C₈-alkanol.

10. A propylene polymer obtainable by a process as claimed in any of claims 3 to 9.

11. The use of a propylene polymer as claimed in claim 1, 2 or 10 for the production of films, fibers or moldings.

12. A film, fiber or molding comprising a propylene polymer as claimed in claim 1, 2 or 10.

## Revendications

1. Des polymérisats de polypropylène, contenant une matrice d'un homopolymérisat de propylène et un copolymérisat de propylène et d'autres alcènes, **caractérisés en ce que**, lors de la séparation des polymérisats de propylène selon la tacticité et la répartition des comonomères des chaînes de polymères, on dissout d'abord les polymérisats de propylène dans du xylol en ébullition, puis on refroidit la solution à un taux de refroidissement de 10 °C/h à 25 °C, puis, lors du réchauffement, on sépare les polymérisats de propylène en fractions de solubilités différentes, à partir de la matrice, qui lors du réchauffement de la solution refroidie de polymérisat de propylène demeure non dissoute à une température de 80 °C, une
ou plusieurs conditions suivantes étant remplies:
i. plus de 20 % du poids de la matrice demeure non dissous lors d'un réchauffement supplémentaire à une température de 112 °C, ou
ii. plus de 8 % du poids de la matrice demeure non dissous lors d'un réchauffement supplémentaire à une température de 117 °C, ou
iii. plus de 1 % du poids de la matrice demeure non dissous lors d'un réchauffement supplémentaire à une température de 122 °C.

2. Des polymérisats de propylène selon la revendication 1, **caractérisés en ce que** la matrice remplit une ou plusieurs des conditions suivantes:
i. plus de 30 % du poids de la matrice demeure non dissous lors d'un réchauffement supplémentaire à une température de 112 °C, ou
ii. plus de 12 % du poids de la matrice demeure non dissous lors d'un réchauffement supplémentaire à une température de 117 °C, ou
iii. plus de 2 % du poids de la matrice demeure non dissous lors d'un réchauffement supplémentaire à une température de 122 °C.

3. Procédé de fabrication des polymérisats de propylène, dans lequel, dans une première phase de polymérisation, on polymérise du propylène à des températures comprises entre 50 et 120 °C et à des pressions allant de 15 à 40 bars, puis dans une deuxième phase de polymérisation, on polymérise en plus un copolymérisat de propylène et d'autres alcènes-1 ayant jusqu'à 10 atomes de carbone à des températures comprises entre 30 et 100°C et des pressions allant de 5 à 40 bars, et on effectue la polymérisation en présence d'un système de catalyseur Ziegler-Natta, contenant comme composants actifs:
a) un composant solide contenant du titane, qui est obtenu par réaction d'un halogénure de titane avec un composé de magnésium non chloré, un oxyde inorganique en tant que support, un alcanol C₁-C₈ et un composé donneur d'électrons, de la manière suivante :
dans une première phase, on décompose l'oxyde inorganique servant de support dans un solvant inerte avec une solution du composé de magnésium non chloré, puis on laisse ce mélange réagir à une température comprise entre 10 et 120 °C pendant 0,5 à 5 heures, puis on le transforme en un produit intermédiaire non chloré à une température allant de -20 à 80 °C en le mélangeant en continu avec un C₁-C₈-alcanol en excès molaire multiplié par au moins 1,3, par rapport au composé de magnésium, on ajoute ensuite l'halogénure de titane et le composé donneur d'électrons, et on fait réagir le mélange résultant pendant au moins 10 minutes à une température comprise entre 10 et 150 °C, puis on filtre le produit ainsi obtenu , on le lave et
dans une deuxième phase, le produit solide obtenu à la première phase est extrait dans un solvant inerte, contenant au moins 5 % en poids de tétrachlorure de titane, puis lavé avec un alcane liquide.
et comme cocatalyseurs
b) un composé d'aluminium et
c) un composé donneur d'électrons supplémentaires
**caractérisé en ce que**, dans la première phase de polymérisation, on ajuste le rapport molaire entre le composé de l'aluminium b) et le composé donneur d'électrons supplémentaire c) entre 1,5:1 et 9:1.

4. Procédé pour la fabrication de polymérisats de propylène selon la revendication 3, **caractérisé en ce que**, dans la première phase de polymérisation, on ajuste le rapport molaire entre le composé de l'aluminium b) et le composé donneur d'électrons supplémentaire c) entre 2:1 et 8:1.

5. Procédé pour la fabrication de polymérisats de propylène selon la revendication 3 ou 4, dans lequel on utilise un oxyde inorganique en tant que support dans la fabrication du composant solide contenant du titane a), ledit support présentant un pH de 1 à 6,5, un diamètre médian de 5 à 200 µm et des cavités ou canaux d'un diamètre médian de 1 à 20 µm, dont la fraction volumique macroscopique occupe de 5 à 30 % de la particule globale.

6. Procédé pour la fabrication de polymérisats de propylène selon les revendications 3 à 5 dans lequel on utilise un gel de silice en tant qu'oxyde inorganique dans la fabrication du composant solide contenant du titane a).

7. Procédé pour la fabrication de polymérisats de propylène selon les revendication 3 à 6 dans lequel on utilise un trialkyl aluminium, dont les groupes alkyles ont de 1 à 8 atomes de carbone, en tant que composé d'aluminium b).

8. Procédé pour la fabrication de polymérisats de propylène selon les revendications 3 à 7, dans lequel on utilise au moins un composé du silicium organique de formule générale (I) en tant que composé donneur d'électrons supplémentaire c).
R¹ ₙSi(OR²)₄₋ₙ (I)
où les R¹ sont identiques ou différents et représentent un groupe C₁-C₂₀-alkyle, un groupe cycloalkyle de 5 à 7 chaînons, pouvant être substitué par un C₁-C₁₀-alkyle, un groupe C₆-C₁₈-aryle ou un groupe C₆-C₁₈-aryl-C₁-C₁₀-alkyle. les R² sont identiques ou différents, et représentent un groupe C₁-C₂₀-alkyle, tandis que n représente les entiers 1, 2 ou 3.

9. Procédé pour la fabrication de polymérisats de propylène selon les revendications 3 à 8 dans lequel on effectue la polymérisation dans la deuxième phase en présence d'un C₁-C₈-alcanol.

10. Des polymérisats de propylène, susceptibles d'être obtenus par le procédé selon les revendications 3 à 9.

11. Utilisation des polymérisats de propylène selon les revendications 1, 2 ou 10, pour la fabrication de feuilles, fibres ou corps moulés.

12. Des feuilles, fibres ou corps moulés fabriqués en polymérisats de propylène selon les revendications 1, 2 ou 10.
